(19) Europäisches Patentamt
European Patent Office
Office européen des brevets

(11) EP 0 820 201 B1

(12) **EUROPÄISCHE PATENTSCHRIFT**

(45) Veröffentlichungstag und Bekanntmachung des Hinweises auf die Patenterteilung:
**17.08.2005 Patentblatt 2005/33**

(51) Int Cl.^7: **H04N 9/83**

(21) Anmeldenummer: **97201920.2**

(22) Anmeldetag: **23.06.1997**

(54) **Schaltungsanordnung zur Frequenzumsetzung eines Farbsignals**

Circuit arrangement for frequency conversion of a colour signal

Circuit de conversion de fréquence d’un signal couleur

(84) Benannte Vertragsstaaten:
**AT DE FR GB**

(30) Priorität: **18.07.1996 DE 19628996**

(43) Veröffentlichungstag der Anmeldung:
**21.01.1998 Patentblatt 1998/04**

(73) Patentinhaber:
- **Philips Intellectual Property & Standards GmbH
20099 Hamburg (DE)**
Benannte Vertragsstaaten:
**DE**
- **Koninklijke Philips Electronics N.V.
5621 BA Eindhoven (NL)**
Benannte Vertragsstaaten:
**FR GB AT**

(72) Erfinder:
- **Hildebrandt, Günter
Röntgenstrasse 24, 22335 Hamburg (DE)**
- **Heinemann, Herbert
Röntgenstrasse 24, 22335 Hamburg (DE)**

(74) Vertreter: **von Laue, Hanns-Ulrich et al
Philips Intellectual Property & Standards GmbH,
Postfach 50 04 42
52088 Aachen (DE)**

(56) Entgegenhaltungen:
**EP-A- 0 161 810**
**EP-A- 0 169 930**
**US-A- 4 994 923**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 820 201 B1

Printed by Jouve, 75001 PARIS (FR)

## Beschreibung

Die Erfindung betrifft eine Schaltungsanordnung zur Frequenzumsetzung eines Farbsignals, welches in Bildzeilen vorliegt und einen Farbburst und ein einem Farbträger der ersten Trägerfrequenz aufmoduliertes Farbinformationssignal aufweist, auf eine zweite Trägerfrequenz, wobei die Schaltungsanordnung in eine Betriebsart zur konjugiert-komplex-Bildung schaltbar ist, in welcher diese ein Ausgangssignal erzeugt, in welchem zusätzlich zu der Frequenzumsetzung das Farbsignal eine von Bildzeile zu Bildzeile alternierende Phasenlage entsprechend der PAL-Norm aufweist, wobei das Farbsignal in jeder zweiten Bildzeile in konjugiert-komplexer Form vorliegt.

In dem von der Firma Philips vertriebenen integrierten Schaltkreis TDA 9726 ist eine derartige Schaltungsanordnung enthalten. Diese weist zwei Mischer auf. Das Eingangssignal mit relativ niedriger Frequenz des Farbträgers wird mittels eines Mischers auf diejenige Farbträgerfrequenz umgesetzt, die gemäß der Übertragungsnorm vorgesehen ist. Dem ersten Mischer ist ein Kammfilter nachgeschaltet. Diesem wiederum ist ein zweiter Mischer nachgeschaltet, der dazu dient, das konjugiert-komplexe Signal zu erzeugen. In einer Betriebsart zur konjugiert-komplex-Bildung wird dieses benötigt, um beispielsweise ein NTSC-Signal in ein PAL-Signal zu transcodieren. Dieses konjugiert-komplexe Signal wird ebenfalls für ein PAL-Signal benötigt, dessen PAL-Sequenz gestört ist. Bei der bekannten Schaltungsanordnung wird die Umschaltung zwischen dem Signal in ursprünglicher Phasenlage und dem konjugiert-komplexen Signal durch einen Schalter vorgenommen, mittels dessen von Bildzeile zu Bildzeile wechselnd entweder auf das Eingangs- oder das Ausgangssignal des Mischers zugegriffen wird.

Diese Schaltungsanordnung gemäß dem Stande der Technik hat den Nachteil, daß diejenige Trägerfrequenz, auf die das Farbsignal mittels des ersten Mischers umgesetzt wird, immer diejenige sein muß, die die Schaltungsanordnung ausgangsseitig liefert. Dies ist erforderlich, da der Ausgangsschalter wechselweisig auf das Ausgangssignal des ersten Mischers und des zweiten Mischers zugreift. Soll die Trägerfrequenz am Ausgang des zweiten Mischers nicht gleich derjenigen Frequenz sein, die die Schaltung ausgangsseitig liefern soll, so wäre hinter dem zweiten Mischer und dem ihm nachgeschalteten Schalter ein dritter Mischer vorzusehen, der dann die Umsetzung auf diese Frequenz vornimmt.

Es ist Aufgabe der Erfindung die eingangs genannte Schaltungsanordnung dahingehend weiterzuentwickeln, daß einerseits die Trägerfrequenz, auf die das Farbsignal mittels des ersten Mischers umgesetzt wird, innerhalb vorgegebener Grenzen wählbar ist und welche gleichwohl mit geringem Schaltungsaufwand auskommt.

Diese Aufgabe ist erfindungsgemäß dadurch gelöst, daß das der ersten Trägerfrequenz aufmodulierte Farbsignal mittels eines ersten Mischers auf eine dritte Trägerfrequenz umgesetzt wird, welche höher als die erste und niedriger als die zweite Trägerfrequenz ist, daß ein zweiter Mischer vorgesehen ist, mittels dessen das Farbsignal mit der dritten Trägerfrequenz auf die zweite Trägerfrequenz umgesetzt wird, daß dem zweiten Mischer während der Zeiten, in denen die Betriebsart zur konjugiert-komplex-Bildung aktiviert ist, ein zweites Mischsignal und während der übrigen Zeiten ein erstes Mischsignal zugeführt wird, daß die Frequenz des ersten Mischsignals so gewählt ist, daß deren Summe mit der dritten Trägerfrequenz einer Frequenz entsprechend der zweiten Trägerfrequenz entspricht, daß die Frequenz des zweiten Mischsignals so gewählt ist, daß die Differenz aus dieser Frequenz und der dritten Trägerfrequenz einer Frequenz entsprechend der zweiten Trägerfrequenz entspricht, daß die Phasenbeziehungen des dem zweiten Mischer zugeführten, der dritten Trägerfrequenz aufmodulierte Farbsignals, des ersten Mischsignals und des zweiten Mischsignals so gewählt sind, daß im Ausgangssignal des zweiten Mischers das Farbinformationssignal dem Farbträger jeweils mit der gewünschten Phasenlage aufmoduliert ist und daß dem zweiten Mischer ausgangsseitig ein Bandpaßfilter nachgeschaltet ist, der ausgangsseitig das einem Farbträger mit der zweiten Träger-Frequenz aufmodulierte Farbsignal liefert.

Mittels eines ersten Mischers wird die Farbträgerfrequenz des Eingangssignals auf eine Frequenz heraufgemischt, welche oberhalb derjenigen Farbträgerfrequenz des Eingangssignals liegt. Andererseits liegt diese Frequenz auch unterhalb derjenigen Frequenz, die die Schaltungsanordnung ausgangsseitig liefern soll und welche beispielsweise diejenige Frequenz ist, die für die Farbträgerfrequenz entsprechend der Übertragungsnorm des eingangsseitigen Farbsignals vorgesehen ist. Es gibt also für die Wahl der dritten Trägerfrequenz, auf die das eingangsseitige Farbsignal mittels des ersten Mischers umgesetzt wird, einen relativ großen möglichen Wertebereich.

Es ist zusätzlich ein zweiter Mischer vorgesehen, der zwei Zwecken dient. Zum einen wird mittels des zweiten Mischers die Farbträgerfrequenz des ihm zugeführten Signals, die durch den Mischvorgang im ersten Mischer bestimmt wird, auf diejenige Farbträgerfrequenz umgesetzt, die die Schaltungsanordnung ausgangsseitig liefern soll. Zum zweiten wird der zweite Mischer gleichzeitig gewünschtenfalls dazu eingesetzt, ein konjugiert-komplexes Signal zu erzeugen. Durch diese doppelte Funktion des zweiten Mischers wird ein dritter Mischer eingespart, der bei der Schaltung nach dem Stande der Technik erforderlich wäre, wenn die Farbträgerfrequenz am Ausgang des ersten Mischers nicht bereits derjenigen Farbträgerfrequenz entspricht, die die Schaltungsanordnung ausgangsseitig liefern soll.

Für diese Doppelfunktion können dem Mischer

zwei Mischsignale zugeführt werden. Ein erstes Mischsignal ist bezüglich seiner Frequenz so gewählt, daß die Summe der Farbträgerfrequenz des dem zweiten Mischer eingangsseitig zugeführten Farbsignals und des ersten Mischsignals der Frequenz der zweiten Trägerfrequenz entspricht, die die Schaltungsanordnung ausgangsseitig liefern soll. Ein zweites Mischsignal ist bezüglich seiner Frequenz so gewählt, daß die Differenz aus der Frequenz des zweiten Mischsignals und derjenigen Trägerfrequenz, die das dem zweiten Mischer zugeführte Farbsignal hat, gleich der dritten Trägerfrequenz ist, nämlich derjenigen Frequenz die der Träger des Farbsignals aufweisen soll, das die Schaltungsanordnung ausgangsseitig liefert. Dabei sind die Phasenbeziehungen zu beachten, die zwischen dem Farbsignal, das dem zweiten Mischer zugeführt wird, und den beiden Mischsignalen so gewählt sein müssen, daß im Ausgangssignal des Mischers in Abhängigkeit davon, welches Mischsignal diesem zugeführt wird, das Farbsignal entweder in der ursprünglichen Phasenlage dem Farbträger aufmoduliert ist oder in konjugiert-komplexer Phasenlage.

Während derjenigen Zeiten, in denen dem zweiten Mischer das erste Mischsignal zugeführt wird, findet mittels des Mischers lediglich eine Frequenzumsetzung statt. Während dieser Zeiten wird der Farbträger mit der dritten Trägerfrequenz, den der erste Mischer liefert, auf die zweite Trägerfrequenz umgesetzt. Dieser Modus kann beispielsweise dazu eingesetzt werden, ein PAL-Signal, dessen PAL-Sequenz nicht gestört ist, zu verarbeiten. Entsprechendes gilt für ein NTSC-Signal, das eingangsseitig vorliegt und das auch ausgangsseitig wieder als NTSC-Signal zur Verfügung gestellt werden soll.

In einer Betriebsart zur konjugiert-komplex-Bildung wird dem Mischer das zweite Mischsignal zugeführt. Dies hat zur Folge, daß der zweite Mischer ausgangsseitig ein Farbsignal liefert, das dem Farbträger der dritten Trägerfrequenz in konjugiert-komplexer Phasenlage aufmoduliert ist. Diese Betriebsart kann daher zusätzlich dazu eingesetzt werden, beispielsweise ein eingangsseitig zugeführtes Signal der NTSC-Norm in ein solches der PAL-Norm zu transcodieren. Diese Betriebsart kann auch dazu eingesetzt werden, ein PAL-Signal, dessen PAL-Sequenz gestört ist, zu korrigieren, d. h. eine korrekte PAL-Sequenz wieder herzustellen. Soll ein Signal der NTSC-Norm in ein Signal der PAL-Norm transcodiert werden, ist die Schaltungsanordnung zeilenalternierend in die normale Betriebsart und in die Betriebsart zur konjugiert-komplex-Bildung zu setzen. Es wird dann während jeder zweiten Zeile eine Farbsignal erzeugt, in welchem der Farbträger der dritten Trägerfrequenz diesem in konjugiert-komplexer Phasenlage aufmoduliert ist. Während der übrigen Zeiten wird die Phasenlage des Farbsignals nicht beeinflußt. Es ist damit eine Transcodierung des NTSC-Signals in ein solches der PAL-Norm vorgenommen worden. Ist in einem PAL-Signal die PAL-Sequenz gestört, so wird bei jeder Störung die Schaltungsanordnung in die jeweils andere Betriebsart gesetzt. Sie wird also aus der normalen Betriebsart in die Betriebsart zur konjugiert-komplex-Bildung oder umgekehrt gesetzt. Dies hat zur Folge, daß mit jedem Umschalten zwischen jeden Betriebsarten eine Korrektur der PAL-Sequenz vorgenommen werden kann. Bei jeder Störung der PAL-Sequenz wird einmal zwischen den beiden Betriebsarten umgeschaltet. Bei der nächstfolgenden Störung erfolgt wiederum eine derartige Umschaltung.

Die Schaltungsanordnung weist somit den Vorteil auf, daß sie aufgrund der freien Wahl der Trägerfrequenz des Ausgangssignals des ersten Mischers sehr universell einsetzbar ist. Beispielsweise zwischen dem ersten und dem zweiten Mischer zusätzlich vorgesehene Filter können damit mit der jeweils gewünschten Frequenz arbeiten. Durch die doppelte Funktion des zweiten Mischers wird gleichwohl kein dritter Mischer benötigt. Vielmehr wird der zweite Mischer sowohl zur Frequenzumsetzung wie auch zur konjugiert-komplex-Bildung eingesetzt. Der Schaltungsaufwand bleibt somit gering.

Für eine derartige Funktion wären bei der Schaltung nach dem Stande der Technik drei Mischer erforderlich. Ein weiterer praktischer Nachteil besteht darin, daß beim Stand der Technik ein weiteres Tiefpaßfilter hinter dem dann vorzusehenden dritten Mischer erforderlich wäre. Dieses ist deshalb besonders nachteilig, da damit eine weitere Signalverzögerung in dem für das Farbsignal einträte. Das in einem anderen Zweig parallel verarbeitete Luminanzsignal müßte daher ebenfalls entsprechend verzögert werden. Derartige Verzögerungen sind aber gerade in integrierten Schaltkreisen nur sehr schwer bzw. teuer zu realisieren. Daher ist die relativ geringe Signalverzögerung der Schaltungsanordnung nach der Erfindung besonders vorteilhaft.

Gemäß einer Ausgestaltung der Erfindung ist vorgesehen, daß die dritte Trägerfrequenz gleich der halben zweiten Trägerfrequenz ist und daß das dem zweiten Mischer zugeführte, der dritten Trägerfrequenz aufmodulierte Farbsignal mit einer Phasenlage
das erste Mischsignal mit einer Phasenlage

$$\cos\left(\frac{\omega t}{2}+\varphi+\gamma\right)$$

und das zweite Mischsignal mit der Phasenlage

$$\sin\left(\frac{\omega t}{2}+\alpha\right)$$

vorliegen, wobei gilt $\alpha-\beta+2\gamma=0$

$$\sin\left(\frac{3\omega t}{2}+\beta\right)$$

und worin φ die Nutzphasenlage ist, die die Farbinformation enthält und ω die zweite Farbträgerfrequenz und α,β,γ weitere durch die Schaltungsanordnung erzeugte Phasenverschiebungen sind und daß das erste Mischsignal eine Frequenz entsprechend der dritten Trägerfrequenz und das zweite Mischsignal eine Frequenz entsprechend der dreifachen dritten Trägerfrequenz aufweisen.

Gemäß dieser vorteilhaften Ausgestaltung wird die Farbträgerfrequenz des der Schaltungsanordnung eingangsseitig zugeführten Farbsignals mittels des ersten Mischers auf die halbe Soll-Ausgangsfrequenz des Trägers gemischt. Handelt es sich bei der zweiten Trägerfrequenz, die das Signal ausgangsseitig aufweist, um diejenige entsprechend der Übertragungsnorm, so setzt der erste Mischer gemäß dieser vorteilhaften Ausgestaltung das der Schaltungsanordnung eingangs zugeführte Signal auf eine Trägerfrequenz um, die die halbe Frequenz dieser Ausgangsfrequenz hat. In diesem Falle weist das erste Mischsignal eine Frequenz entsprechend der dritten Trägerfrequenz und das zweite Mischsignal die dreifache Frequenz der dritten Trägerfrequenz auf. Darüberhinaus sind die obengenannten Phasenbeziehungen einzuhalten.

Gemäß einer weiteren Ausgestaltung der Erfindung ist vorgesehen, daß es sich bei dem der Schaltungsanordnung zugeführten Farbsignal um ein Wiedergabesignal eines Videorekorders handelt und daß dem ersten Mischer ein Kammfilter nachgeschaltet ist, welches dem ihm zugeführten Farbsignal unerwünschte Signalteile, insbesondere von Nachbarspuren eines mittels Videorekorders wiedergegebenen Videobandes stammende Übersprechsignale, ausfiltert.

In dem Falle des Einsatzes der erfindungsgemäßen Schaltungsanordnung in einem Videorekorder ist das der Schaltungsanordnung eingangsseitig zugeführte Farbsignal auf die sogenannte Color-Under-Trägerfrequenz aufmoduliert, mit der das Farbsignal auf dem Band aufgezeichnet ist. Von dieser Frequenz wird das Farbsignal mittels des ersten Mischers auf eine höhere Trägerfrequenz umgesetzt. Mit dieser Frequenz arbeitet auch das Kammfilter, dessen Aufwand relativ gering gehalten werden kann, da im Gegensatz zu der Schaltung nach dem Stande der Technik das Kammfilter mit einer niedrigeren Frequenz als der zweiten Trägerfrequenz arbeitet. Damit wird der Schaltungsaufwand im Kammfilter verringert. Erst hinter dem Kammfilter wird die Trägerfrequenz auf die zweite Trägerfrequenz hochgesetzt. Dies geschieht mittels des zweiten Mischers, der ggf. gleichzeitig zur Transcodierung eingesetzt werden kann.

Gemäß einer weiteren Ausgestaltung der Erfindung ist ein Signalgenerator und eine nachgeschaltelte Teilerschaltung vorgesehen, welche ein näherungsweise rechteckförmiges Signal liefert, in welchem unter anderem die Frequenzkomponenten des ersten und des zweiten Mischsignals enthalten sind und das einem ersten Filter, mittels welchem die Frequenzkomponente des zweiten Mischsignals unterdrückt wird und welcher ausgangsseitig das erste Mischsignal liefert, und einem zweiten Filter zugeführt wird, mittels welchem die Frequenzkomponente des ersten Mischsignals unterdrückt wird und welcher ausgangsseitig das zweite Mischsignal liefert.

Die Frequenzen des ersten und des zweiten Mischsignals können vorteilhaft mittels eines solchen Signalgenerators erzeugt werden, dessen Ausgangssignal ein Spektrum aufweist, in dem die erforderlichen Frequenzkomponenten enthalten sind. Beträgt beispielsweise die dritte Farbträgerfrequenz die Hälfte der zweiten Farbträgerfrequenz, so werden aus dem Rechtecksignal die Frequenzkomponenten entsprechend der dritten Farbträgerfrequenz und entsprechend der dreifachen Farbträgerfrequenz benötigt. Diese Frequenzen sind in einem Rechtecksignal ohnehin enthalten. Es ist daher ein erstes Filter vorgesehen, das die Frequenzkomponente mit der dreifachen Frequenz der dritten Trägerfrequenz unterdrückt und daher ausgangsseitig vorzugsweise die Frequenzkomponente mit der einfachen Frequenz der dritten Trägerfrequenz liefert. Es ist ferner ein zweites Filter vorgesehen, das umgekehrt die Frequenzkomponente mit der einfachen dritten Trägerfrequenz unterdrückt und ausgangsseitig u.a. die Frequenzkomponente mit der dreifachen dritten Trägerfrequenz liefert. Die Ausgangssignale dieser beiden Filter werden als Mischsignale für den zweiten Mischer eingesetzt.

Ggf. können diese Filter zusätzlich dazu herangezogen werden, die gewünschten Phasenbeziehungen zwischen den beiden Mischsignalen und dem dem zweiten Mischer eingangsseitig zugeführten Farbsignal, das dem Träger mit der dritten Trägerfrequenz aufmoduliert ist, einzustellen. Hierzu ist gemäß einer weiteren Ausgestaltung der Erfindung vorgesehen, daß das erste Filter die Frequenzkomponente des ersten Mischsignals in ihrer Phasenlage um -45° und das zweite Filter die Frequenzkomponente des dritten Mischsignals in ihrer Phasenlage um +45° verschiebt.

Die verschiedenen in dem Rechtecksignal enthaltenen Frequenzkomponenten weisen verschiedene Amplituden auf. Dies führt dazu, daß die beiden Mischsignale ebenfalls unterschiedliche Amplituden aufweisen. Da dies unerwünscht ist, ist gemäß einer weiteren Ausgestaltung der Erfindung vorgesehen, daß die Schaltungsanordnung Mittel zum Ausgleich der verschieden großen Amplituden der Frequenzkomponenten aufweist. Diese Mittel können beispielsweise so ausgestaltet sein, daß die Ausgangssignale der beiden Filter, Verstärkern und/oder Abschwächern zugeführt werden, die ausgangsseitig die beiden Mischsignale mit gleicher Amplitude liefern.

Erfindungsgemäß besteht gemäß vorteilhafter Ausgestaltung jedoch auch die Möglichkeit, daß dem Bandpaßfilter ein Verstärker mit umschaltbarer Verstärkung nachgeschaltet ist, welcher in der Betriebsart zur konjugiert-komplex-Bildung die unterschiedlichen Amplitudenwerte des Ausgangssignals des Bandpaßfilter ausgleicht, welche in Abhängigkeit davon auftreten, ob dem zweiten Mischer das erste oder das zweite Mischsignal zugeführt wird.

Zur Erzeugung der gewünschten Frequenzen des ersten und des zweiten Mischsignals sowie zur Erzeugung der gewünschten Phasenlage zwischen den Mischsignalen und der Trägerfrequenz des dem zweiten Mischer zugeführten Farbsignals ist gemäß weiterer Ausgestaltung der Erfindung vorgesehen, daß der Signalgenerator ein rechteckförmiges Signal mit einer Grundfrequenz entsprechend der zweiten Trägerfrequenz liefert, dessen Frequenz mittels eines Multiplizierers verdoppelt wird, dessen Ausgangssignal einer Teilerschaltung zugeführt wird, die an einem ersten Ausgang ein durch vier geteiltes Ausgangssignal ohne Phasenverschiebung liefert, welches auf das erste und abhängig von der Betriebsart und Farbnorm des Farbsignals auf das zweite Filter gekoppelt wird, und welche an einem zweiten Ausgang ein durch vier geteiltes Ausgangssignal liefert, welches gegenüber dem Ausgangssignal des ersten Ausgangs um +90° phasenverschoben ist und für einen Phasenvergleich herangezogen wird, dessen Ausgangssignal zur Erzeugung eines Mischsignals für den ersten Mischer herangezogen wird.

Eine derartige digitale Teilerschaltung ist mit sehr geringem Schaltungsaufwand zu realisieren. Sie bietet darüberhinaus den Vorteil, daß die beiden Ausgänge mit 0° und 90° Phasenlage in der Teilerschaltung leicht zu realisieren sind. Damit kann ein derartiger Teiler auf einfache Weise zur Erzeugung der gewünschten Phasenbeziehungen insbesondere dem Mischsignal herangezogen werden. Im Gegensatz zu der Schaltung nach dem Stande der Technik ist hierzu kein gesonderter Phasenschieber erforderlich.

Nachfolgend wird ein Ausführungsbeispiel der Erfindung anhand der Zeichnung näher erläutert.

Die einzige Figur zeigt ein Blockschaltbild eines Ausführungsbeispiels der erfindungsgemäßen Schaltung, der eingangsseitig ein Farbsignal zugeführt wird, das einer relativ niedrigen Trägerfrequenz aufmoduliert ist. Darüberhinaus ist in diesem Signal ein sogenannter Farbburst enthalten, der zu Beginn jeder Bildzeile die Soll-Phasenlage des Farbsignals angibt. Bei dieser Trägerfrequenz kann es sich beispielsweise um die sogenannte Color-Under-Frequenz eines Farbsignals handeln, mit der ein solches mittels eines Videorekorders auf ein Band aufgezeichnet wird und mit der es auch vom Band wieder gelesen wird.

Die Schaltungsanordnung liefert dieses Signal ausgangsseitig auf eine zweite Trägerfrequenz umgesetzt. Bei dieser Trägerfrequenz kann es sich beispielsweise um diejenige Frequenz handeln, die das Farbsignal gemäß der Übertragungsnorm aufweisen soll. Für PAL-Farbsignale beträgt diese beispielsweise 4,4... MHz. Dieses Signal ist in der Figur mit $f_{sc}$ gekennzeichnet.

Die in der Figur dargestellte Schaltungsanordnung kann neben dieser Frequenzumsetzung zusätzlich dazu herangezogen werden, von Bildzeile zu Bildzeile alternierend ein Farbsignal in Originalphasenlage und in konjugiert-komplexer Phasenlage zu erzeugen.

Das der Schaltungsanordnung eingangsseitig zugeführte Farbsignal, das dem Farbträger mit der Colour-Under-Frequenz aufmoduliert ist, wird einem ersten Mischer 1 zugeführt. Mittels des ersten Mischers 1 wird die Farbträgerfrequenz auf eine dritte Farbträgerfrequenz umgesetzt, welche in diesem Ausführungsbeispiel der halben Farbträgerfrequenz des Ausgangssignals $f_{sc}$ entspricht. Das Ausgangssignal des ersten Mischers gelangt auf ein Kammfilter 2. Der Schaltungsaufwand für dieses Kammfilter 2 ist relativ gering, da es nicht mit der Frequenz des Ausgangssignals $f_{sc}$ sondern nur mit der halben Frequenz arbeitet. Das Kammfilter 2 kann beispielsweise dazu herangezogen werden, Farbsignalanteile, die beim Auslesen des Signales $f_{cu}$ vom Videoband von Nachbarspurenübersprechen, zu unterdrücken.

Das Ausgangssignal des Kammfilters 2 gelangt u.a. an einen Phasenkomparator 3. Der Phasenkomparator 3 ist mit einem Signal BK getaktet. Bei diesem handelt es sich um ein sogenanntes Burst-key-Signal, das nur während derjenigen Zeiten aktiv ist, in denen der sogenannte Farbburst übertragen wird.

Der Phasenkomparator 3 ist ausgangsseitig mit einem Filter 4 gekoppelt, daß das gewünschte Phasen- und Frequenzverhalten der Regelschleife einstellt. Dieses mit dem Filter 4 gekoppelte Signal gelangt an einen spannungsgesteuerten Oszillator 5, dessen Ausgangssignal mittels eines Teilers 6 heruntergeteilt wird. Der Teiler 6 liefert ausgangsseitig ein Signal mit der Frequenz

$$\frac{f_{sc}}{2} + f_{cu}$$

Dies hat zur Folge, daß das Ausgangssignal des ersten Mischers die Frequenz

$$\frac{f_{sc}}{2}$$

aufweist.

Dem Phasenkomparator 3 wird ferner ein Eingangssignal zugeführt, das aus dem Ausgangssignal eines Quarzoszillators 7 abgeleitet ist. Das Ausgangssignal dieses Quarzoszillators wird zunächst mittels eines Multiplizierers 8 auf die doppelte Frequenz heraufgesetzt. Das Ausgangssignal dieses Multiplizierers 8 wird zum einen zur Taktung des Kammfilters 2 herangezogen und zum anderen einem Teiler 9 zugeführt. Dieser Teiler 9 teilt das Signal durch 4 und liefert ein an den ersten Ausgang 10 dieses Signal mit unveränderter Phasenlage. An einem zweiten Ausgang 11 wird dieses Signal mit einer Phasenlage +90° zur Verfügung gestellt. Das Ausgangssignal des zweiten Ausganges 11 gelangt an einen ersten Eingangskontakt 12 eines Schalters 14a. Das Ausgangssignal des ersten Ausgangs 10 der Teilerschaltung 9 gelangt an einen zweiten Eingangskontakt 13 des Schalters 14a. Der Ausgangskontakt 14 des Schalters 14a ist mit einem zweiten Eingang des Phasenvergleichers 3 gekoppelt. Handelt es sich bei dem Signal $f_{cu}$ um ein PAL-Signal, so kann der Schalter 14a dazu herangezogen werden, daß dem Phasenkomparator zugeführte Vergleichssignal ebenfalls von Bildzeile zu Bildzeile um 90° umzutasten. Damit weisen beide dem Phasenkomparator 3 zugeführte Burst-Signale diegleichen von Bildzeile zu Bildzeile erfolgenden Phasensprünge auf. Dies hat den Vorteil, daß der Phasenkomparator 3 trotz dieser Phasensprünge ausgangsseitig ein konstantes Signal liefert. Damit arbeitet auch bei einem PAL-Signal der Phasenregelkreis, der aus dem Phasenkomparator 3 dem Schleifenfilter 4, dem spannungsgesteuerten Oszillator 5, dem Teiler 6 und dem ersten Mischer 1 gebildet wird ohne Frequenz bzw. Phasensprünge.

Das Ausgangssignal des Kammfilters 2 gelangt zum einen auf einen Phasenschieber 15, der dieses Signal mit einer Phasenverschiebung von + 45° beaufschlagt. Das Ausgangssignal des Phasenschiebers 15 gelangt auf einen ersten Eingangskontakt 16 eines Schalters 18.

Das Ausgangssignal des Kammfilters 2 gelangt ferner auf einen zweiten Eingangskontakt 17 des Schalters 18. Ein Ausgangskontakt 19 des Schalters 18 ist mit einem ersten Eingang 21 eines zweiten Mischers 20 verbunden.

Ein zweiter Eingang 22 des zweiten Mischers 20 ist mit einem Ausgangskontakt 24 eines Schalters 23 verbunden. Der Schalter 23 weist einen ersten Eingangskontakt 25 und einen zweiten Eingangskontakt 26 auf. Am ersten Eingangskontakt 25 wird dem Schalter 23 das erste Mischsignal und am zweiten Eingangskontakt 26 das zweite Mischsignal zugeführt.

Diese Mischsignale werden aus den Ausgangssignalen der Teilerschaltung 9, die diese an den Ausgängen 10 bzw. 11 zur Verfügung gestellt, abgeleitet. Dazu ist der zweite Ausgang 11 der Teilerschaltung 9 mit einem ersten Eingangskontakt 29 eines Schalters 27 gekoppelt. Der erste Ausgang 10 der Teilerschaltung 9 ist mit einem zweiten Eingangskontakt 28 des Schalters 27 gekoppelt. Der Ausgangskontakt 30 des Schalters 27 ist mit einem Abschwächer 31 verbunden, dem ein erstes Filter 33 nachgeschaltet ist, dessen Ausgangssignal mit dem ersten Eingangskontakt 25 des Schalters 23 gekoppelt ist.

Das Ausgangssignal des ersten Ausgangs 10 der Teilerschaltung 9 ist auf einen Verstärker 32 geführt, dessen Ausgangssignal einem zweiten Filter 34 zugeführt wird, der ausgangsseitig mit dem zweiten Eingangskontakt 26 des Schalters 23 verbunden ist.

Mittels des Schalters 27 kann die Phasenbeziehung zwischen den beiden Mischsignalen in gewünschter Weise eingestellt werden. Mittels des Schalters 23 wird eine Umschaltung zwischen dem ersten und dem zweiten Mischsignal vorgenommen.

Beide Mischsignale werden aus den Ausgangssignalen der Teilerschaltung 9 abgeleitet, die ein Spektrum von Frequenzanteilen enthält. In dem in der Figur dargestellten Ausführungsbeispiel beträgt die Trägerfrequenz des dem zweiten Mischer 20 an seinem ersten Eingang 21 zugeführten Farbsignals

$$\frac{f_{sc}}{2}$$

Damit muß das erste Mischsignal ebenfalls diese Frequenz und das zweite Mischsignal die dreifache Frequenz aufweisen. Diese Frequenzanteile sind in den Ausgangssignalen der Teilerschaltung 9 enthalten. Zur Ausfilterung der jeweils gewünschten Frequenzanteile bzw. zur Unterdrückung der jeweils unerwünschten Frequenzanteile sind das erste Filter 33 und das zweite Filter 34 vorgesehen. Das erste Filter 33 ist dabei so ausgelegt, daß es die Frequenzanteile entsprechend

$$3\frac{f_{sc}}{2}$$

unterdrückt und den Frequenzanteil

$$\frac{f_{sc}}{2}$$

mit einer Phasenverschiebung von -45° versieht. Dies wird durch die Auslegung des Filters mit einer Güte Q=3/8 erzielt.

Das zweite Filter 34 weist ebenfalls eine Güte von q=3/8 auf und unterdrückt vorrangig die Frequenz

$$\frac{f_{sc}}{2}$$

Die Frequenz

$$3\frac{f_{sc}}{2},$$

die das Filter ausgangsseitig als Nutzfrequenz liefert,

wird mit einer Phasenverschiebung von +45° versehen. Damit stehen an den Eingängen 25 und 26 das erste bzw. das zweite Mischsignal mit den erforderlichen Frequenzen zur Verfügung. In der Betriebsart zur konjugiert-komplex-Bildung wird der Schalter 23 in die Positionen 26 gebracht. Steht der Schalter in der Position 25 so wird mittels des zweiten Mischers 20 eine Frequenzumsetzung des ihm an seinem Eingang 21 mit der Trägerfrequenz

$$\frac{f_{sc}}{2}$$

zugeführten Farbsignal auf die Trägerfrequenz $f_{sc}$ vorgenommen. In dem Ausgangssignal des zweiten Mischers 20 sind neben diesem Frequenzanteil noch weitere enthalten, weshalb dem zweiten Mischer 20 ein Bandpaßfilter 35 nachgeschaltet ist, das ausgangsseitig nur denjenigen Signalanteil der Trägerfrequenz $f_{sc}$ liefert.

Während derjenigen Zeiten, in denen der Schalter 23 auf seinen zweiten Eingang 26 geschaltet ist, wird dem zweiten Mischer 20 an seinem zweiten Eingang 22 das zweite Mischsignal mit der Frequenz

$$3\frac{f_{sc}}{2}$$

zugeführt. Durch Mischung mit dem Signal der Frequenz

$$\frac{f_{sc}}{2}$$

entsteht u.a. ein Signal mit der Frequenz $f_{sc}$, jedoch mit konjugiert-komplexer-Phasenlage. Es hat dann also sowohl eine Frequenzumsetzung auf die Frequenz $f_{sc}$ wie auch gleichzeitig die Erzeugung eines konjugiert-komplexen Signals stattgefunden.

Handelt es sich bei dem Eingangssignal $f_{cu}$ beispielsweise um ein Signal der NTSC-Norm und soll dieses Signal neben der Frequenzumsetzung auf die entsprechend der Übertragungsnorm vorgesehene Farbträgerfrequenz auch in ein Farbsignal der PAL-Norm transcodiert werden, so wird der Schalter 23 von Bildzeile zu Bildzeile umgeschaltet, so daß zeilenalternierend ein Signal in der Originalphasenlage und in der konjugiert-komplexen Phasenlage erzeugt wird. Diese Betriebsart kann auch für ein PAL-Signal eingesetzt werden, dessen PAL-Sequenzzeit zeitweise gestört ist. Während derartiger Störungen wird dann ebenfalls mittels entsprechendem Umschalten des Schalters 23 die korrekte PAL-Sequenz wiederhergestellt. Dabei wird der Schalter 23 bei jeder Störung der PAL-Sequenz auf die jeweils andere Position umgeschaltet. In dieser verbleibt er, solange nachfolgend die PAL-Sequenz ungestört ist. Bei der nächsten Störung der PAL-Sequenz wird der Schalter wiederum in die jeweils andere Position geschaltet.

Soll eine derartige Transcodierung nicht stattfinden, beispielsweise weil ein eingangsseitig zugeführtes NTSC-Signal auch als solches wieder rausgegeben werden soll oder weil ein eingangsseitig zugeführtes PAL-Signal eine ungestörte PAL-Sequenz aufweist, verbleibt der Schalter 23 auf seiner Position 25, so daß der zweite Mischer 20 nur eine Frequenzumsetzung vornimmt.

Neben diesen bisher erläuterten Frequenzbedingungen des dem zweiten Mischer 20 seinem Eingang 21 zugeführten Farbsignals sowie der ihm am zweiten Eingang 22 zugeführten Mischsignale sind auch die Phasenbeziehungen dieser drei Signale zueinander zu beachten.

Wie oben bereits erläutert wurde, nimmt der erste Filter 33 eine Phasenverschiebung um -45° und der zweite Filter 34 eine solche um +45° vor. Damit weist das erste Mischsignal eine Phasenlage von

$$\sin\left(\frac{\omega t}{2}+\alpha\right)$$

und das zweite Mischsignal eine solche von

$$\sin\left(\frac{3\omega t}{2}+\beta\right)$$

auf, wobei $\alpha$=-45° und $\beta$=+45° sind. Setzt man die Phasenlage des dem Mischer 20 an seinem ersten Eingang zugeführten Farbsignals bzw. dessen Farbträgers mit

$$\cos\left(\frac{\omega t}{2}+\varphi+\gamma\right)$$

an, so muß für die Phasenwinkel $\alpha$,$\beta$ und $\gamma$ gelten:

$$\alpha-\beta+2\gamma=0$$

Dabei ist $\varphi$ der Nutzphasenwinkel des Farbsignals also diejenige Phasenwinkel der im Verhältnis zum Farbburst das Nutzsignal, nämlich die Farbinformation, überträgt. Der Winkel $\gamma$ ist ein weiterer in der Schaltungsanordnung erzeugter Phasenwinkel.

Diese Phasenbedingungen werden nachfolgend anhand dreier Arbeitsbedingungen erläutert.
Zum ersten wird davon ausgegangen, daß ein eingangsseitig zugeführtes NTSC-Signal ausgangsseitig

wieder als solches, jedoch in umgesetzter Frequenzlage, zur Verfügung gestellt werden soll.
Im zweiten Fall wird ein eingangsseitig zugeführtes PAL-Signal ausgangsseitig wieder als PAL-Signal wieder zur Verfügung gestellt, wobei zeitweise eine Korrektur der PAL-Sequenz vorgenommen wird.
Im dritten Fall wird ein eingangsseitig zugeführtes NTSC-Signal neben der Frequenzumsetzung auch in ein PAL-Signal transcodiert.

Im Falle eines eingangsseitig zugeführten NTSC-Signals, das ausgangsseitig als solches mit der Norm-Frequenz des Farbträgers zur Verfügung gestellt werden soll, verbleibt der Schalter 14a auf seinem Eingang 13. Damit weist das dem ersten Eingang 21 des Mischers 20 zugeführte Signal eine Phasenlage

$$\cos\left(\frac{\omega t}{2}+\varphi+\gamma\right)$$

auf, worin $\gamma$=0 ist. Der Schalter 27 ist auf seinen ersten Eingang 29 geschaltet, so daß das im ersten Filter 33 zugeführte Signal um +90° phasenverschoben ist. Da das erste Filter 33 das ihm zugeführte Signal mit einer Phasenverschiebung von -45° versieht, weist das Ausgangssignal des ersten Filters 33 insgesamt eine Phasenverschiebung von +45° auf. Damit beträgt in den obengenannten Gleichungen $\alpha$=45°. In entsprechender Weise gilt unverändert für das Ausgangssignal des zweiten Filters 34, daß dieses eine Phasenverschiebung von 45° aufweist. Es gilt also $\beta$=45°. Damit ist für ein derartiges NTSC-Signal die obengenannte Gleichung erfüllt. Hierbei spielt an sich die Phasenlage des zweiten Mischsignals, daß das zweite Filter 34 liefert keine Rolle, da der Schalter 23 solange in seiner Position 25 verbleibt, wie keine Transcodierung des NTSC-Signals vorgenommen werden soll.

Soll eine Transcodierung des eingangsseitigen NTSC-Signals $f_{cu}$ erfolgen, so wird mittels des Schalters 18 der Farbburst um 45° verschoben. Dies geschieht dadurch, daß der Schalter 18 während des Farbburst auf seinen Eingang 16 geschaltet wird. Während der übrigen Zeiten ist der Schalter 18 auf seinen Eingang 17 geschaltet. Dieses Umschalten dient dazu, auch den Farbburst im Ausgangssignal der Schaltungsanordnung in der Phasenlage gemäß der PAL-Norm zu erzeugen.

Für den Transcodierungsvorgang des NTSC-Signals wird nun jedoch der Schalter 23 von Bildzeile zu Bildzeile alternierend in die Positionen 25 bzw. 26 gebracht, so daß das dem zweiten Mischer an seinem ersten Eingang 21 zugeführte Signal wechselweise mit dem ersten und dem zweiten Mischsignal gemischt wird. Damit wird in obenbeschriebener Weise von Bildzeile zu Bildzeile wechselnd ein Ausgangssignal $f_{sc}$ erzeugt, das bildzeilenalternierend in ursprünglicher Phasenlage und in konjugiert-komplexer Phasenlage vorliegt. Damit ist eine Transcodierung des NTSC-Signals in ein solches der PAL-Norm erfolgt.

Handelt es sich bei dem eingangs mit den niedrigeren Trägerfrequenz vorliegenden Signal $f_{cu}$ um ein solches der PAL-Norm, das auf seine Farbträgerfrequenz entsprechend der Norm umgesetzt werden soll, so wird wie oben bereits erläutert der Schalter 14a von Bildzeile zu Bildzeile alternierend in die Positionen 12 und 13 geschaltet, um die Burst-Phasensprünge von ±45° für das Mischsignal des ersten Mischers 1 auszugleichen.

Ferner wird der Schalter 27 in die Position 28 gebracht, so daß beiden Filtern 33 und 34 Eingangssignale der gleichen Phasenlage zugeführt werden. Damit beträgt in den obengenannten Gleichungen aufgrund der Phasenverschiebung von -45° des ersten Filters 33 $\alpha$=-45°. Der Wert $\beta$ des zweiten Filters 34 beträgt nach wie vor +45°. Damit muß in der obengenannten Gleichung $\alpha-\beta+2\gamma=0$ $\gamma$ den Wert +45° aufweisen. Dies ist auch tatsächlich der Fall, da durch das zeilenweise Umschalten des Schalters 14a zwischen einem Eingangssignal von 0° und +90° im Mittel eine Phasenverschiebung von +45° eintritt. Diese wird in dem Phasenregelkreis mit dem Phasenkomparator 3, dem Schleifenfilter 4, dem spannungsgesteuerten Oszillator 5, dem Teiler 6 und dem Mischer 1 erzeugt. Dies hat zur Folge, daß die Phasenlage des dem zweiten Mischer 20 an seinem ersten Eingang 21 zugeführten Farbsignal bzw. dessen Farbträgers beträgt:

$$\cos\left(\frac{\omega t}{2}+\varphi+\gamma\right)$$

worin $\gamma$+45° beträgt. Damit ist die obengenannte Gleichung erfüllt, so daß mittels des zweiten Mischers 20 die gewünschten Ausgangssignale erzeugt werden.

Solange die PAL-Sequenz des Signals $f_{cu}$ ungestört ist, verbleibt der Schalter 23 auf seinem ersten Eingang 25, so daß in dem zweiten Mischer 20 eine Mischung mit dem ersten Mischsignal stattfindet. In diesem Falle wird das Signal $f_{cu}$ auf die Frequenz $f_{sc}$ umgesetzt. Ist beispielsweise die PAL-Sequenz des Eingangssignals gestört, so wird der Schalter 23 bei jeder Störung in die jeweils andere Position umgeschaltet. Ist die PAL-Sequenz nachfolgend ungestört, verbleibt der Schalter in dieser Position. Bei der nächsten Störung wird der Schalter wieder in die jeweils andere Postion umgeschaltet.

Im Ergebnis erreicht die Schaltungsanordnung mit einem einfachen Aufbau die gewünschte Frequenzumsetzung sowie ggf. eine Erzeugung eines konjugiert-komplexen Signals entweder zur Transcodierung oder zur Korrektur der PAL-Sequenz.

**Patentansprüche**

1. Schaltungsanordnung zur Frequenzumsetzung eines Farbsignals, welches in Bildzeilen vorliegt und einen Farbburst und ein einem Farbträger der ersten Trägerfrequenz aufmoduliertes Farbinformationssignal aufweist, auf eine zweite Trägerfrequenz, wobei die Schaltungsanordnung in eine Betriebsart zur konjugiert-komplex-Bildung schaltbar ist, in welcher diese ein Ausgangssignal erzeugt, in welchem zusätzlich zu der Frequenzumsetzung das Farbsignal in konjugiert komplexer Form vorliegt, **dadurch gekennzeichnet,**

   **daß** das der ersten Trägerfrequenz aufmodulierte Farbsignal mittels eines ersten Mischers (1) auf eine dritte Trägerfrequenz umgesetzt wird, welche höher als die erste und niedriger als die zweite Trägerfrequenz ist,
   **daß** ein zweiter Mischer (20) vorgesehen ist, mittels dessen das Farbsignal mit der dritten Trägerfrequenz auf die zweite Trägerfrequenz umgesetzt wird, daß dem zweiten Mischer während der Zeiten, in denen die Betriebsart zur konjugiert-komplex-Bildung aktiviert ist, ein zweites Mischsignal und während der übrigen Zeiten ein erstes Mischsignal zugeführt wird,
   **daß** die Frequenz des ersten Mischsignals so gewählt ist, daß deren Summe mit der dritten Trägerfrequenz einer Frequenz entsprechend der zweiten Trägerfrequenz entspricht, daß die Frequenz des zweiten Mischsignals so gewählt ist, daß die Differenz aus dieser Frequenz und der dritten Trägerfrequenz einer Frequenz entsprechend der zweiten Trägerfrequenz entspricht,
   **daß** die Phasenbeziehungen des dem zweiten Mischer (20) zugeführten, der dritten Trägerfrequenz aufmodulierte Farbsignals, des ersten Mischsignals und des zweiten Mischsignals so gewählt sind, daß im Ausgangssignal des zweiten Mischers (20) das Farbinformationssignal dem Farbträger jeweils mit der gewünschten Phasenlage aufmoduliert ist
   und **daß** dem zweiten Mischer (20) ausgangsseitig ein Bandpaßfilter (35) nachgeschaltet ist, der ausgangsseitig das einem Farbträger mit der zweiten Träger-Frequenz aufmodulierte Farbsignal liefert.

2. Schaltungsanordnung nach Anspruch 1, **dadurch gekennzeichnet, daß** die dritte Trägerfrequenz gleich der halben zweiten Trägerfrequenz ist und daß das dem zweiten Mischer (20) zugeführte, der dritten Trägerfrequenz aufmodulierte Farbsignal mit einer Phasenlage

$$\cos\left(\frac{\omega t}{2}+\varphi+\gamma\right)$$

das erste Mischsignal mit einer Phasenlage

$$\sin\left(\frac{\omega t}{2}+\alpha\right)$$

und das zweite Mischsignal mit der Phasenlage

$$\sin\left(\frac{3\omega t}{2}+\beta\right)$$

vorliegen, wobei gilt

$$\alpha-\beta+2\gamma=0$$

und worin $\varphi$ die Nutzphasenlage ist, die die Farbinformation enthält und $\omega$ die zweite Farbträgerfrequenz und $\alpha,\beta,\gamma$ weitere durch die Schgaltungsanordnung erzeugte Phasenverschiebungen sind und das erste Mischsignal eine Frequenz entsprechend der dritten Trägerfrequenz und das zweite Mischsignal eine Frequenz entsprechend der dreifachen dritten Trägerfrequenz aufweisen.

3. Schaltungsanordnung nach Anspruch 1 oder 2, **dadurch gekennzeichnet, daß** es sich bei dem der Schaltungsanordnung zugeführten Farbsignal um ein Wiedergabesignal eines Videorekorders handelt und daß dem ersten Mischer (1) ein Kammfilter (2)nachgeschaltet ist, welches dem ihm zugeführten Farbsignal unerwünschte Signalanteile, insbesondere von Nachbarspuren eines mittels Videorekorders wiedergegebenen Videobandes stammende Übersprechsignale, ausfiltert.

4. Schaltungsanordnung nach einem der Ansprüche 1 bis 3, **dadurch gekennzeichnet, daß** ein Signal-Generator (7) und eine nachgeschaltete Teilerschaltung (9) vorgesehen ist, welche ein näherungsweise rechteckförmiges Signal liefert, in welchem unter anderem die Frequenzkomponenten des ersten und des zweiten Mischsgnals enthalten sind und das einem ersten Filter (33), mittels welchem die Frequenzkomponente des zweiten Mischsignals unterdrückt wird und welcher ausgangsseitig das erste Mischsignal liefert, und einem zweiten Filter (34) zugeführt wird, mittels welchem die Frequenzkomponente des ersten Mischsignals unterdrückt wird und welcher ausgangsseitig das zweite Mischsignal liefert.

**5.** Schaltungsanordnung nach Anspruch 4, **dadurch gekennzeichnet, daß** das erste Filter (33) die Frequenzkomponente des ersten Mischsignals in ihrer Phasenlage um -45° und das zweite Filter (34)die Frequenzkomponente des dritten Mischsignals in ihrer Phasenlage um +45°verschiebt.

**6.** Schaltungsanordnung nach Anspruch 4 oder 5, **dadurch gekennzeichnet, daß** Mittel (31,32) zum Ausgleich der verschieden großen Amplituden der Frequenzkomponenten vorgesehen sind.

**7.** Schaltungsanordnung nach Anspruch 6, **dadurch gekennzeichnet, daß** dem Bandpaßfilter (35) ein Verstärker mit umschaltbarer Verstärkung nachgeschaltet ist, welcher in der Betriebsart zur konjugiert-komplex-Bildung die unterschiedlichen Amplitudenwerte des Ausgangssignals des Bandpaßfilter ausgleicht, welche in Abhängigkeit davon auftreten, ob dem zweiten Mischer (20) das erste oder das zweite Mischsignal zugeführt wird.

**8.** Schaltungsanornung nach Anspruch 4 oder 5, **dadurch gekennzeichnet, daß** die Ausgangssignale der beiden Filter (33,34) einem ersten Schalter (23) zugeführt werden, der in der Betriebsart zur konjugiert-komplex-Bildung dem zweiten Mischer (20) das zweite Mischsignal und während der übrigen Zeiten das erste Mischsignal liefert.

**9.** Schaltungsanordnung nach Anspruch 4, **dadurch gekennzeichnet, daß** der Signal-Generator (7) ein rechteckförmiges Signal mit einer Grundfrequenz entsprechend der zweiten Trägerfrequenz liefert, dessen Frequenz mittels eines Multiplizierers (8) verdoppelt wird, dessen Ausgangssignal einer Teilerschaltung (9) zugeführt wird, die an einem ersten Ausgang ein (10) durch vier geteiltes Ausgangssignal ohne Phasenverschiebung liefert, welches auf das erste (33) und abhängig von der Betriebsart und Farbnorm des Farbsignals auf das zweite (34) Filter gekoppelt wird, und welche an einem zweiten Ausgang (11) ein durch vier geteiltes Ausgangssignal liefert, welches gegenüber dem Ausgangssignal des ersten Ausgangs um +90° phasenverschoben ist und für einen Phasenvergleicher (3) herangezogen wird, dessen Ausgangssignal zur Erzeugung eines Mischsignals für den ersten Mischer (1) herangezogen wird.

**10.** Schaltungsanordnung nach einem der Ansprüche 1 bis 9, **dadurch gekennzeichnet, daß** es sich bei dem der Schaltungsanordnung zugeführten Farbsignal um ein solches der PAL-Norm handelt, in welchem wenigstens zeitweise die alterniernde Phasenlage des Farbsignals gestört ist, und daß während dieser Zeiten die Betriebsart zur konjugiert-komplex-Bildung wechselweise ein- bzw. ausgeschaltet wird.

**11.** Schaltungsanordnung nach einem der Ansprüche 1 bis 10, **dadurch gekennzeichnet, daß** zur Verarbeitung eines NTSC-Signals dem zweiten Mischer (20) das erste Mischsignal zugeführt wird und die Schaltungsanordnung nicht in die Betriebsart zur konjugiert-komplex-Bildung gesetzt wird.

**12.** Schaltungsanordnung nach einem der Ansprüche 1 bis 11, **dadurch gekennzeichnet, daß** es sich bei dem der Schaltungsanordnung zugeführten Farbsignal um ein solches der NTSC-Norm handelt und daß die Schaltungsanordnung zur Transcodierung dieses Signals in die PAL-Norm zeilenalternierend während jeder zweiten Bildzeile in die Betriebsart zur konjugiert-komplex-Bildung gesetzt wird.

**13.** Verwendung der Schaltungsanordnung nach einem der Ansprüche 1 bis 12 in einem Videorekorder, wobei das der Schaltungsanordnung zugeführte Farbsignal in der von einem Videoband gelesenen und ggf. verstärkten Form einem Color-Under-Träger aufmoduliert ist und mittels der Schaltungsanordnung auf die zweite Trägerfrequenz umgesetzt wird und ggf. in der Betriebsart zur konjugiert-komplex-Bildung ein zeilenalternierend konjugiert komplexes Signal erzeugt.

**Claims**

**1.** A circuit arrangement for frequency conversion of a color signal to a second carrier frequency, which color signal is present in picture lines and comprises a color burst and a chrominance information signal modulated on a chrominance subcarrier of the first carrier frequency, the circuit arrangement being switchable in a mode for conjugate-complex formation in which it generates an output signal in which, additionally to the frequency conversion, the color signal is present in a conjugate-complex form, **characterized in that** the color signal modulated on the first carrier frequency is converted to a third carrier frequency by means of a first mixer (1), which third carrier frequency is higher than the first and lower than the second carrier frequency, a second mixer (20) is provided by means of which the color signal having the third carrier frequency is converted to the second carrier frequency, the second mixer receives a second mixing signal during the periods when the conjugate-complex mode is activated, and receives a first mixing signal during the remaining periods, the frequency of the first mixing signal is chosen to be such that its sum having the third carrier frequency corresponds to a frequency in conformity with the second carrier frequency, the frequency of the second mixing signal is chosen to be such that the difference between this frequency and the third carrier frequency corresponds to a frequency in conformity with the second carrier frequency, the phase relations between the color signal applied to the second mixer (20) and modulated on the third carrier frequency, the first mixing signal and the second mixing signal are chosen to be such that the chrominance information signal in the output signal of the second mixer (20) is modulated on the chrominance subcarrier with the desired phase position, and the output of the second mixer (20) is connected to a bandpass filter (35) which supplies, from its output, the color signal modulated on a chrominance subcarrier having the second carrier frequency.

**2.** A circuit arrangement as claimed in claim 1, **characterized in that** the third carrier frequency is equal to half the second carrier frequency, and the color signal applied to the second mixer (20) and modulated on the third carrier frequency, is present with a phase position

$$\cos\left(\frac{\omega t}{2}+\varphi+\gamma\right)$$

the first mixing signal is present with a phase position

$$\sin\left(\frac{\omega t}{2}+\alpha\right)$$

and the second mixing signal is present with the phase position

$$\sin\left(\frac{3\omega t}{2}+\beta\right)$$

while it holds that $\alpha-\beta+2\gamma=0$,
and in which $\varphi$ is the useful phase position comprising the chrominance information and $\omega$ is the second chrominance subcarrier frequency, and $\alpha$, $\beta$, $\gamma$ are further phase shifts generated by the circuit arrangement, and the first mixing signal has a frequency corresponding to the third carrier frequency and the second mixing signal has a frequency corresponding to the threefold third carrier frequency.

**3.** A circuit arrangement as claimed in claim 1 or 2, **characterized in that** the color signal applied to the circuit arrangement is a reproducing signal for a video recorder, and the first mixer (1) precedes a comb filter (2) which filters the unwanted signal components in the color signal applied thereto, particularly crosstalk signals originating from neighboring tracks of a video tape played on a video recorder.

**4.** A circuit arrangement as claimed in any one of claims 1 to 3, **characterized in that** a signal generator (7) and a subsequent divider circuit (9) are provided, which supplies a substantially square-wave-shaped signal comprising, inter alia, the frequency components of the first and the second mixing signal and being applied to a first filter (33) by means of which the frequency components of the second mixing signal are suppressed and which supplies the first mixing signal from its output, and being applied to a second filter (34) by means of which the frequency components of the first mixing signal are suppressed and which supplies the second mixing signal from its output.

**5.** A circuit arrangement as claimed in claim 4, **characterized in that** the first filter (33) shifts the phase position of the frequency components of the first mixing signal by -45° and the second filter (34) shifts the phase position of the frequency components of the third mixing signal by +45°.

**6.** A circuit arrangement as claimed in claim 4 or 5, **characterized in that** it comprises means (31, 32) for compensating the frequency component amplitudes of different values.

**7.** A circuit arrangement as claimed in claim 6, **characterized in that** the bandpass filter (35) precedes an amplifier having a switchable amplification, which, in the conjugate-complex mode, compensates the different amplitude values of the output signal of the bandpass filter, which values occur in dependence upon the fact whether the first or the second mixing signal is applied to the second mixer (20).

**8.** A circuit arrangement as claimed in claim 4 or 5, **characterized in that** the output signals of the two filters (33, 34) are applied to a first switch (23) which, in the conjugate-complex mode, supplies a second mixing signal to the second mixer (20) and the first mixing signal during the remaining periods.

**9.** A circuit arrangement as claimed in claim 4, **characterized in that** the signal generator (7) supplies a square-wave signal having a fundamental frequency corresponding to the second carrier frequency whose frequency is doubled by means of a

multiplier (8) whose output signal is applied to a divider circuit (9), a first output (10) of which supplies an output signal divided by four without a phase shift, which output signal is applied to the first filter (33) and, dependent on the mode and color standard of the color signal, to the second filter (34), and a second output (11) of which supplies an output signal which is divided by four and is phase-shifted by +90° with respect to the output signal at the first output, and is used for a phase comparator (3) whose output signal is used for generating a mixing signal for the first mixer (1).

**10.** A circuit arrangement as claimed in any one of claims 1 to 9, **characterized in that** the color signal applied to the circuit arrangement is a signal of the PAL standard in which at least temporarily the alternating phase position of the color signal is disturbed, and the conjugate-complex mode is alternately switched on and off during these periods.

**11.** A circuit arrangement as claimed in any one of claims 1 to 10, **characterized in that**, for processing an NTSC signal, the first mixing signal is applied to the second mixer (20) and the circuit arrangement is not set to the conjugate-complex mode.

**12.** A circuit arrangement as claimed in any one of claims 1 to 11, **characterized in that** the color signal applied to the circuit arrangement is a signal of the NTSC standard, and, for transcoding said signal to the PAL standard, the circuit arrangement is line-alternately set to the conjugate-complex mode during every second picture line.

**13.** Use of the circuit arrangement as claimed in any one of claims 1 to 12 in a video recorder, in which the color signal applied to the circuit arrangement is modulated on a carrier in color-under carrier frequency in a form reproduced and possibly amplified by means of a video tape, and is converted to the second carrier frequency by means of the circuit arrangement, and generates a line-alternating conjugate-complex signal when set to the conjugate-complex mode.

**Revendications**

**1.** Circuit de conversion de fréquence d'un signal couleur, qui est présent dans les lignes d'image et présente une giclée de couleurs et un signal d'information de la couleur modulé sur une porteuse couleur de la première fréquence porteuse, sur une deuxième fréquence porteuse, dans lequel le circuit peut être commuté dans un mode de fonctionnement pour la formation de complexes conjugués, dans lequel celui-ci produit un signal de sortie, dans lequel le signal couleur est présent sous forme complexe conjuguée,

<u>**caractérisé en ce**</u>

**que** le signal couleur modulé sur la première fréquence porteuse est converti à l'aide d'un premier mélangeur (1) sur une troisième fréquence porteuse qui est supérieure à la première et inférieure à la deuxième fréquence porteuse,

**qu'**il est prévu un deuxième mélangeur (20) à l'aide duquel le signal couleur avec la troisième fréquence porteuse est converti sur la deuxième fréquence porteuse, qu'il est amené au deuxième mélangeur un deuxième signal de mélange pendant les temps durant lesquels le type de fonctionnement pour la formation de complexes conjugués est activé et un premier signal de mélange pendant le reste du temps, que la fréquence du premier signal de mélange est choisie de telle sorte que sa somme avec la troisième fréquence porteuse corresponde à une fréquence correspondant à la deuxième fréquence porteuse, que la fréquence du deuxième signal de mélange est choisie de telle sorte que la différence entre cette fréquence et la troisième fréquence porteuse corresponde à une fréquence correspondant à la deuxième fréquence porteuse,

**que** les relations de phase du signal couleur modulé sur la troisième fréquence porteuse et amené au deuxième mélangeur (20), du premier signal de mélange et du deuxième signal de mélange sont sélectionnées de telle sorte que, dans le signal de sortie du deuxième mélangeur (20), le signal d'information couleur soit modulé sur la porteuse couleur, respectivement avec la position de phase souhaitée et

**qu'**un filtre passe-bande (35) est monté en aval du deuxième mélangeur (20) côté sortie et délivre côté sortie une porteuse couleur avec le signal couleur modulé sur la deuxième fréquence porteuse.

**2.** Circuit selon la revendication 1, **caractérisé en ce que** la troisième fréquence porteuse est égale à la moitié de la deuxième fréquence porteuse et que le signal couleur amené au deuxième mélangeur (20) et modulé sur la troisième fréquence porteuse est présent avec une position de phase

$$\cos\left(\frac{\omega t}{2}+\varphi+\gamma\right),$$

le premier signal de mélange avec une position de phase

$$\sin\left(\frac{\omega t}{2}+\alpha\right),$$

et le deuxième signal de mélange avec la position de phase

$$\sin\left(\frac{3\omega t}{2}+\beta\right)$$

et dans lesquelles φ est la position de phase utile qui contient l'information de couleur et ω la deuxième fréquence porteuse couleur et α,β,γ sont d'autres déphasages produits par le circuit et que le premier signal de mélange présente une fréquence correspondant à la troisième fréquence porteuse et le deuxième signal de mélange une fréquence correspondant à la triple troisième fréquence porteuse.

3. Circuit selon l'une des revendications 1 ou 2, **caractérisé en ce que** le signal couleur amené au circuit est un signal de lecture d'un magnétoscope et qu'un filtre à peigne (2) est monté en aval du premier mélangeur (1) et extrait par filtrage du signal couleur qui lui est amené les composantes de signal indésirables, en particulier des signaux de diaphonie provenant de pistes voisines d'une bande vidéo lue à l'aide du magnétoscope.

4. Circuit selon l'une des revendications 1 à 3, **caractérisé en ce qu'**un générateur de signaux (7) et un circuit diviseur (9) monté en aval sont prévus et délivrent un signal approximativement rectangulaire dans lequel les composantes de fréquence des premier et deuxième signaux de mélange sont notamment contenues et qui est amené à un premier filtre (33) à l'aide duquel la composante de fréquence du deuxième signal de mélange est supprimée et qui délivre côté sortie le premier signal de mélange et un deuxième filtre (34) à l'aide duquel la composante de fréquence du premier signal de mélange est supprimée et qui délivre côté sortie le deuxième signal de mélange.

5. Circuit selon la revendication 4, **caractérisé en ce que** le premier filtre (33) déphase la composante de fréquence du premier signal de mélange dans sa position de phase de -45° et le deuxième filtre (34) la composante de fréquence du troisième signal de mélange dans sa position de phase de +45°.

6. Circuit selon l'une des revendications 4 ou 5, **caractérisé en ce que** des moyens (31, 32) sont prévus pour compenser les amplitudes de taille différente des composantes de fréquence.

7. Circuit selon la revendication 6, **caractérisé en ce qu'**un amplificateur avec une amplification commutable est monté en aval du filtre passe-bande (35) et, dans le mode de fonctionnement pour la formation complexe conjuguée, compense les différentes valeurs d'amplitude du signal de sortie des filtres passe-bande qui se produisent selon que le premier ou le deuxième signal de mélange est amené au deuxième mélangeur (20).

8. Circuit selon l'une des revendications 4 ou 5, **caractérisé en ce que** les signaux de sortie des deux filtres (33, 34) sont amenés à un premier commutateur (23) qui délivre, dans le mode de fonctionnement pour la formation de complexes conjugués, le deuxième signal de mélange au deuxième mélangeur (20) et, pendant le reste du temps, le premier signal de mélange.

9. Circuit selon la revendication 4, **caractérisé en ce que** le générateur de signaux (7) délivre un signal rectangulaire avec une fréquence fondamentale correspondant à la deuxième fréquence porteuse dont la fréquence est doublée à l'aide d'un multiplicateur (8) dont le signal de sortie est amené à un circuit diviseur (9) qui délivre à une première sortie un signal de sortie (10) divisé par quatre sans déphasage qui est couplé sur le premier filtre (33) et, en fonction du mode de fonctionnement et de la norme couleur du signal couleur, sur le deuxième filtre (34) et qui délivre à une deuxième sortie (11) un signal de sortie divisé par quatre qui est déphasé de +90° par rapport au signal de sortie de la première sortie et est utilisé pour un comparateur de phase (3) dont le signal de sortie est utilisé pour la production d'un signal de mélange pour le premier mélangeur (1).

10. Circuit selon l'une des revendications 1 à 9, **caractérisé en ce que** le signal couleur amené au circuit est un signal de norme PAL dans lequel la position de phase alternée du signal couleur est perturbée, du moins temporairement, et que, pendant ces moments, le mode de fonctionnement pour la formation de complexes conjugués est activé ou désactivé en alternance.

11. Circuit selon l'une des revendications 1 à 10, **caractérisé en ce que**, pour le traitement d'un signal NTSC, le premier signal de mélange est amené au deuxième mélangeur (20) et le circuit n'est pas réglé en mode de fonctionnement pour la formation de complexes conjugués.

12. Circuit selon l'une des revendications 1 à 11, **caractérisé en ce que** le signal couleur amené au circuit est un signal de norme NTSC et que le circuit, pour le transcodage de ce signal dans la norme PAL, est placé en alternance d'une ligne à l'autre, à chaque deuxième ligne d'image, dans le mode de fonctionnement pour la formation de complexes conjugués.

**13.** Utilisation du circuit selon l'une des revendications 1 à 12 dans un magnétoscope, le signal couleur amené au circuit étant modulé sur une porteuse Color Under sous une forme lue et, éventuellement, amplifiée par une bande vidéo et est converti à la deuxième fréquence porteuse à l'aide du circuit et produit éventuellement un signal complexe conjugué en alternance de ligne dans le mode de fonctionnement pour la formation de complexes conjugués.

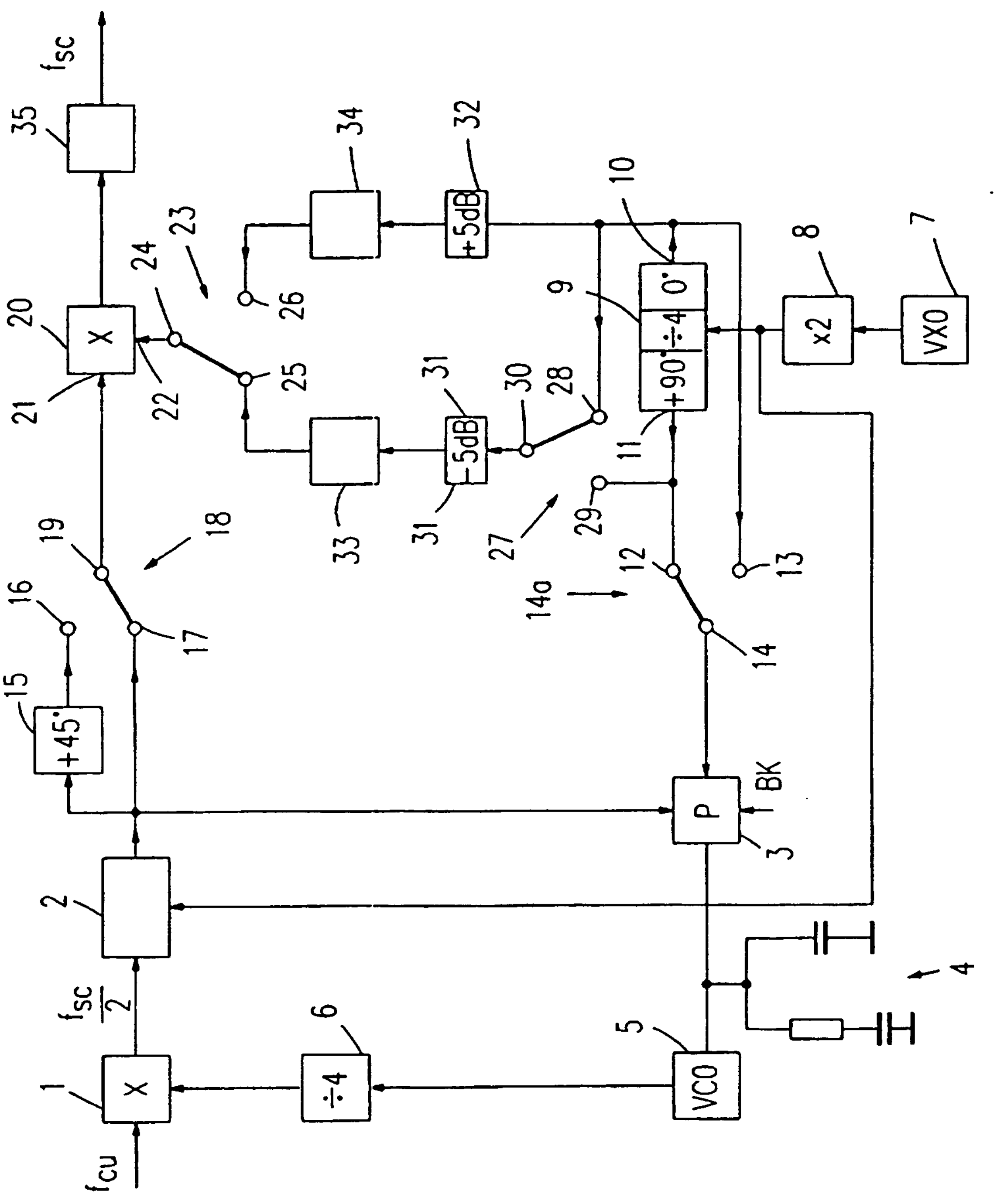

f_cu
X
÷4
VCO
f_sc/2
+45°
P
BK
VXO
x2
+90°
÷4
0°
-5dB
+5dB
X
f_sc